# EUROPEAN PATENT SPECIFICATION

(11) **EP 1 762 666 B1**
(45) Date of publication and mention of the grant of the patent: **27.10.2010**
(21) Application number: 05381044.6
(22) Date of filing: 13.09.2005
(51) Int. Cl.: E04C 3/28, B64C 1/00

(54) **Composite beam with corrugated web**
Verbundträger mit einem gewickelten Steg
Poutre composite avec âme ondulée

(43) Date of publication of application: 14.03.2007
(73) Proprietor: Airbus Operations, S.L., 28906 Getafe Madrid (ES)
(72) Inventor: ESCOBAR BENAVIDES, Francisco de Paula, 28007, Madrid (ES); CLARET VIRÓS, Daniel, 28007, Madrid (ES)
(74) Representative: Elzaburu Marquez, Alberto

(56) References cited:
- DE-A- 10 351 444
- US-A- 4 177 306
- US-B1- 6 520 706

## Description

### FIELD OF THE INVENTION

The present invention refers to a composite beam with a corrugated-shaped web.

A preferred application of the composite beam according to the invention is an aircraft fuselage.

### BACKGROUND OF THE INVENTION

The advantages of corrugations are largely known in the structures community, mainly on civil applications. For many years, metallic corrugated beams have been used to improve efficiency and to save weight. Trapezoidal corrugation in the webs enables thinner webs and/or avoids the need of stringers. Different studies (Masami Hamada -1994-, C. L. Chan & Y. A. Khalid -2002-) concluded that there is a web weight reduction around 10% by the use of a corrugation.

As far as such undulations applied to composite beams are concerned, one may encounter several issues. A proper design might try to provide continuity of the web's plies towards the flanges. In a corrugated web, this implies that the tape or fabric, near the flanges, has to follow the path of the corrugation in addition to the fold to be joined to the flange. All composite technologies have limitations for the minimum achievable radius. Therefore, unless the radii (and thus the corrugation) are large enough, loosing effectivity of the web, tight curvatures are not affordable.

Patent application US 2004/0040252 and Patent US 6,520,706 disclose composite beams having sinusoidal-shaped webs in which additional parts are used to join the web to the flanges. This might increase by a fair amount the total cost of the beam as such additional parts' manufacturing and installation costs are not negligible.

Patent DE 103 51 444 A discloses a composite beam according to the preamble of claim 1.

### SUMMARY OF THE INVENTION

The composite beam according to the invention comprises:
- a web having a corrugated-shaped profile, with aligned parts in two parallel planes in the longitudinal direction and tilted parts between them;
- two flanges;
- a first element of C-shape and a second element of beam-shape, each of them having webs bonded to the parallel parts of the corrugated web in one plane enclosing the corrugated web between them, and having the caps of said first and second elements bonded to one or two additional single flanges or bonded between them to form the beam flanges.

This design solves the problem of joining a corrugated-shaped web to the flanges, avoiding manufacturing restrictions while folding the composite plies of the web towards the flanges.

One advantage of this invention is that the beam is cost-effective and able to save weight compared to straight-web beams.

Other features and advantages of the present invention will arise from the following detailed description of an illustrative embodiment of the object of the invention regarding the attached figures.

### DESCRIPTION OF THE DRAWINGS

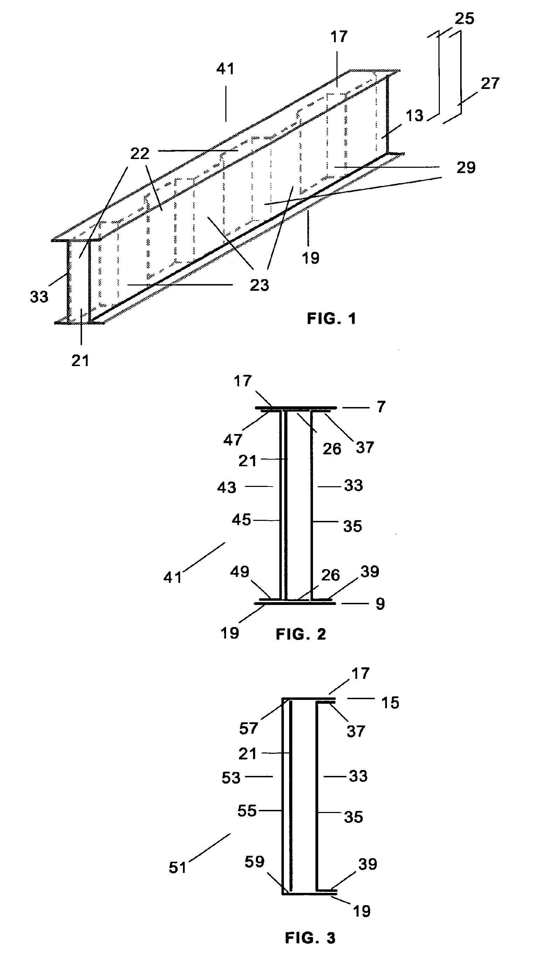

Figure 1 shows a perspective view of a composite beam of I-shape according to a first embodiment of the invention.
Figure 2 shows a cross-section of a composite beam according to a first embodiment of the invention.
Figure 3 shows a cross-section of a composite beam of C-shape according to a second embodiment of the invention.
Figure 4 shows a cross-section of a composite beam of J-shape according to a third embodiment of the invention.
Figures 5a and 5b shows a schematic plan view of two different corrugated-shaped webs.
Figure 6 shows the web of the composite beam of Fig. 1 including horizontal extensions.

### DETAILED DESCRIPTION OF THE INVENTION

In a first embodiment of this invention, the beam 41 has an I-shaped profile and comprises the following elements: a corrugated web 21, two flanges 7, 9 and two C-shaped elements 33, 43. In addition, for the manufacturing processes, other elements such as adhesive 26 qualified at temperature for the interface between the web 21 and the flanges 7, 9 (in a similar way to sandwich constructions) and filler could be required.

The web 21 has a corrugated-shaped profile having aligned parts 22, 23 in two parallel planes 25, 27 in the longitudinal direction and tilted parts 29 between them.

The C-shaped element 33 comprises web 35 and caps 37, 39. Similarly the C-shaped element 43 comprises web 45 and caps 47, 49. Both elements 33, 43 point outwards and are placed one at each side of the corrugated web 13

The web 35 of the C-shaped element 33 is bonded (co-cured, co-bonded or secondary bonded depending on the manufacturing process) to the aligned parts 23 of the web 21 in plane 27 and its caps 37, 39 are bonded (co-cured, co-bonded or secondary bonded depending on the manufacturing process) to the flanges 7, 9 to form the beam flanges 17, 19.

Similarly the web 45 of the C-shaped element 43 is bonded to the aligned parts 22 of the web 21 in plane 25 and its caps 47, 49 bonded to the flanges 7, 9 to form the beam flanges 17, 19.

This design solves the problem of joining the corrugated web 13 to the flanges 7, 9 in a composite beam in a cost-effective way. In addition, the corrugated web 21 aims to stabilize the whole web. A trapezoidal-shaped corrugation gives support to the webs 35, 45 of the C-shaped elements 33, 43, avoiding, thus, buckling issues and the need for additional stringers or a thicker web.

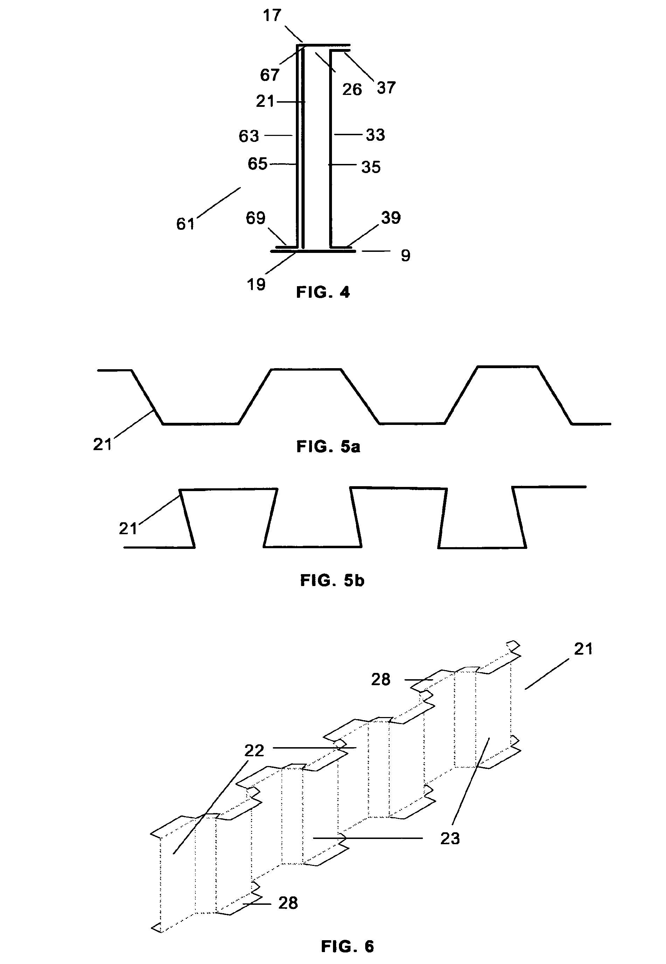

In principle this invention covers any possible angle that could feature tilted parts 29 with aligned parts 22 and 23 as shown in Figs. 5a and 5b. In other words, angles of trapezoidal web 21 are understood as any angle that makes possible the design of a corrugated web having aligned parts as described. A proper design will have this angle into consideration to obtain the preferred combination of stiffness, strength, weight and manufacturing feasibility.

On the other hand, the C-shaped elements function is twofold: to transfer the load from one flange to the other and to joint the web 21 with the flanges 7, 9.

As shown in Fig. 6, the corrugated-shaped web 21 includes horizontal extensions 28 in said aligned parts 22, 23 in order to reinforce the joint of the web 21 to the flanges 7, 9 in addition to that of the web 21 with the C-shaped elements 33, 43.

In a second embodiment of this invention, the beam 51 has a C-shaped profile and comprises the following elements: a corrugated web 21 and two C-shaped elements 33, 53.

The C-shaped element 33 comprises web 35 and caps 37, 39. Similarly the C-shaped element 53 comprises web 55 and caps 57, 59. Both elements 33, 53 are placed parallel one at each side of the corrugated web 21.

The webs 35, 55 of the two C-shaped element 33, 53 are bonded (co-cured, co-bonded or secondary bonded depending on the manufacturing process) to the aligned parts 23, 22 of the web 21 in planes 27, 25 and its caps 37, 57; 39, 59 are bonded (co-cured, co-bonded or secondary bonded depending on the manufacturing process) to form the beam flanges 17, 19.

In a third embodiment of this invention, the beam 61 has a J-shaped profile and comprises the following elements: a corrugated web 21, one flange 9, one C-shaped element 33 and one Z-shaped element 63.

The C-shaped element 33 comprises web 35 and caps 37, 39. Similarly the Z-shaped element 63 comprises web 65 and caps 67, 69. Both elements 33, 63 and are placed one at each side of the corrugated web 21.

The webs 35, 65 of elements 33, 63 are bonded (co-cured, co-bonded or secondary bonded depending on the manufacturing process) to the aligned parts 23, 22 of the web 21 in planes 27, 25. Its upper caps 37, 67 are bonded to form the upper beam flange 17. Its lower caps 39, 69 are bonded to flange 9 to form the lower beam flange 19.

Manufacturing methods to be applied could be pre-impregnated material laid by means of ATL (Automated Tape Laying) equipment for the different elements with subsequent hot-forming, curing, co-bonding and/or secondary bonding steps, but also textiles laid up on moulds and infused with resin systems (liquid or film) prior to curing of elements and bonding processes.

Those modifications comprised within the scope defined by the following claims may be introduced in the preferred embodiment described above.

## Claims

1. Composite beam (41, 51, 61) comprising a web (21) and two flanges (17, 19) wherein the web (21) has a corrugated-shaped profile, with aligned parts (23, 22) in two parallel planes (27, 25) in the longitudinal direction and tilted parts (29) between them, the composite beam being **characterised in that**
it also comprises a first element (33) of C-s4hape and a second element (43, 53, 63) of beam-shape, each of them having webs (35; 45, 55, 65) bonded to the parallel parts (23, 22) of the corrugated web in one plane (27, 25) enclosing the corrugated web (21) between them, and having the caps (37, 39; 47, 49; 57, 59; 67, 69) of said first and second elements bonded to one or two additional single flanges (7, 9) or bonded between them to form the beam flanges (17, 19).

2. Composite beam (41) according to claim 1, wherein said second element is a C-shaped element (43), placed symmetrically to the first element (33) with respect to the beam web (21), and wherein their caps (37, 39; 47, 49) are bonded to additional single flanges (7, 9) to form the beam flanges (17, 19).

3. Composite beam (51) according to claim 1, wherein said second element is a C-shaped element (53), placed parallel to the first element (33), and wherein the caps (37, 39) of the first element (33) are bonded to the caps (57, 59) of the second element (53) to form the beam flanges (17, 19).

4. Composite beam (61) according to claim 1, wherein said second element is a Z-shaped element (63), and wherein the upper cap (37) of the first element (33) is bonded to the upper cap (67) of the second element (63) to form the upper beam flange (17) and the lower caps (39, 69) of both elements (33, 63) are bonded to an additional single flange (9) to form the lower beam flange (19).

5. Composite beam (41, 51, 61) according to any of claims 1-4, wherein its web (21) has a trapezoidal shape having any feasible angle between tilted parts (29) and aligned parts (22, 23).

6. Composite beam (41, 51, 61) according to any of claims 1-5, wherein its web (21) includes horizontal extensions (28) in said aligned parallel parts (22, 23) to be joined to the flanges (17, 19).

## Patentansprüche

1. Verbundbalken (41, 51, 61) mit einer Rippe (21) und zwei Flanschen (17, 19), bei dem
die Rippe (21) ein gewelltes Profil aufweist, mit fluchtenden Teilen (23, 22) in zwei parallelen Ebenen (27, 25) in der Längsrichtung und geneigten Teilen (29) zwischen diesen, wobei sich der Verbundbalken **dadurch kennzeichnet, dass**
er ebenso ein C-förmiges erstes Element (33) und ein balkenförmiges zweites Element (43, 53, 63) umfasst, von denen jedes Rippen (35, 45, 55, 65) aufweist, die an den parallelen Teilen (23, 22) der gewellten Rippe in einer die gewellte Rippe (21) zwischen ihnen einschließenden Ebene (27, 25) angebunden sind, und von denen Kappen (37, 39, 47, 49, 57, 59, 67, 69) des ersten und zweiten Elements an einem oder zwei zusätzlichen Einzelflanschen (7, 9) angebunden oder zwischen ihnen angebunden sind, um die Balkenflansche (17, 19) auszubilden.

2. Verbundbalken (41) gemäß Anspruch 1, bei dem das zweite Element ein C-förmiges Element (43) ist, das symmetrisch zum ersten Element (33) bezüglich der Balkenrippe (21) platziert ist, und bei dem seine Kappen (37, 39, 47, 49) an zusätzlichen einzelnen Flanschen (7, 9) angebunden sind, um die Balkenflansche (17, 19) auszubilden.

3. Verbundbalken (51) gemäß Anspruch 1, bei dem das zweite Element ein C-förmiges Element (53) ist, das parallel zum ersten Element (33) platziert ist, und bei dem die Kappen (37, 39) des ersten Elements (33) an den Kappen (57, 59) des zweiten Elements (53) angebunden sind, um die Balkenflansche (17, 19) auszubilden.

4. Verbundbalken (61) gemäß Anspruch 1, bei dem das zweite Element ein Z-förmiges Element (63) ist, und bei dem die obere Kappe (37) des ersten Elements an der oberen Kappe (67) des zweiten Elements (63) angebunden ist, um den oberen Balkenflansch (17) auszubilden, und die unteren Kappen (39, 69) der beiden Elemente (33, 63) an einem zusätzlichen einzelnen Flansch (9) angebunden sind, um den unteren Balkenflansch (19) auszubilden.

5. Verbundbalken (41, 51, 61) gemäß einem der Ansprüche 1-4, bei dem seine Rippe (21) eine trapezförmige Gestalt aufweist, die jeglichen möglichen Winkel zwischen geneigten Teilen (29) und fluchtenden Teilen (22, 23) aufweist.

6. Verbundbalken (41, 51, 61) gemäß einem der Ansprüche 1-5, bei dem seine Rippe (21) horizontale Verlängerungen (28) in den mit den Flanschen (17, 19) zu verbindenden, fluchtenden parallelen Teilen (22, 23) aufweist.

## Revendications

1. Poutre composite (41, 51, 61) comprenant une âme (21) et deux ailes (17, 19), dans laquelle
l'âme (21) présente un profil ondulé, comportant des parties (23, 22) alignées dans deux plans parallèles (27, 25) dans la direction longitudinale et entre celles-ci des parties obliques (29), la poutre composite étant **caractérisée en ce qu'**
elle comprend également un premier élément (33) en forme de C et un deuxième élément (43, 53, 63) en forme de poutre, chacun d'eux comportant des âmes (35, 45, 55, 65) liées aux parties parallèles (23, 22) de l'âme ondulée dans un plan (27, 25) en enfermant entre elles l'âme ondulée (21) et comportant les embouts (37, 39 ; 47, 49 ; 57, 59 ; 67, 69) desdits premier et deuxième éléments liés à une seule aile ou à deux ailes individuelles additionnelles (7, 9) ou liés entre eux pour constituer les ailes (17, 19) de poutre.

2. Poutre composite (41) selon la revendication 1 dans laquelle ledit deuxième élément est un élément en forme de C (43), disposé symétriquement au premier élément (33) par rapport à l'âme (21) de la poutre, et dans laquelle leurs embouts (37, 39 ; 47, 49) sont liés aux ailes individuelles additionnelles (7, 9) pour constituer les ailes (17, 19) de poutre.

3. Poutre composite (51) selon la revendication 1 dans laquelle ledit deuxième élément est un élément en forme de C (53) disposé parallèlement au premier élément (33) et dans laquelle les embouts (37, 39) du premier élément (33) sont liés aux embouts (57, 59) du deuxième élément (53) pour constituer les ailes (17, 19) de poutre.

4. Poutre composite (61) selon la revendication 1 dans laquelle ledit deuxième élément est un élément en forme de Z (63) et dans laquelle l'embout supérieur (37) du premier élément (33) est lié à l'embout supérieur (67) du deuxième élément (63) pour constituer l'aile supérieure de poutre (17) et les embouts inférieurs des deux éléments (33, 63) sont liés à une aile individuelle additionnelle (9) pour constituer l'aile inférieure (19) de poutre.

5. Poutre composite (41, 51, 61) selon l'une quelconque des revendications 1 à 4, dans laquelle l'âme (21) a une forme trapézoïdale dotée de n'importe quel angle réalisable entre les parties obliques (29) et les parties alignées (22, 23).

6. Poutre composite (41, 51, 61) selon l'une quelconque des revendications 1 à 5, dans laquelle l'âme (21) comprend des extensions horizontales (28) dans lesdites parties parallèles alignées (22, 23), destinées à être réunies aux ailes (17, 19).
